# EUROPÄISCHE PATENTANMELDUNG

(11) **EP 4 779 514 A1**
(43) Veröffentlichungstag der Anmeldung: **22.07.2026**
(21) Anmeldenummer: 26151447.5
(22) Anmeldetag: 13.01.2026
(51) Int. Cl.: G06K 7/10

(54) **OPTOELEKTRONISCHER SENSOR, VERWENDUNG UND VERFAHREN ZUM ERFASSEN UND/ODER AUSLESEN VON STRICHCODE**

(30) Priorität: 15.01.2025 DE 102025101366
(71) Anmelder: SICK AG, 79183 Waldkirch (DE)
(72) Erfinder: SCHÜTZ, Frank, 79365 Rheinhausen (DE); HÖRNER, Sebastian, 79219 Staufen (DE)
(74) Vertreter: Manitz Finsterwald Patent- und Rechtsanwaltspartnerschaft mbB

(57) **Zusammenfassung**

Die Erfindung betrifft einen optoelektronischen Sensor zum Erfassen und/oder Auslesen von Strichcode, umfassend ein Pixelarray, welches ausgebildet ist, von einem Sichtbereich ausgesendetes Licht als Empfangslicht zu empfangen und dabei Empfangsdaten über einen Sichtbereich zu gewinnen, und eine Verarbeitungseinheit, welche ausgebildet ist, lediglich gewonnene Empfangsdaten über einen Lesebereich in dem Sichtbereich zu verwenden, wobei die Empfangsdaten über den Lesebereich auf mittels eines Teilbereichs des Pixelarrays empfangenem Empfangslicht basieren.

## Beschreibung

Die Erfindung betrifft einen optoelektronischen Sensor, eine Verwendung eines optoelektronischen Sensors und ein Verfahren zum Erfassen und/oder Auslesen von Strichcode.

Zum Erfassen und/oder Auslesen von Strichcode sind Laser-basierte Codelesegeräte bekannt. Um an Objekten wie zum Beispiel Paletten angeordnete Strichcodes, und insbesondere übereinander angeordnete Strichcodes, zu erfassen und/oder auszulesen, verwenden bekannte Laser-basierte Codelesegeräte häufig Schwingspiegel zur, insbesondere vertikalen, Erweiterung des Lesebereichs. Solche Laser-basierte Codelesegeräte mit Schwingspiegel umfassen oft eine komplizierte Mechanik und sich bewegende Teile wie zum Beispiel Aktuatoren, was die Kosten und/oder die Fehleranfälligkeit erhöht.

Der Erfindung liegt die Aufgabe zugrunde, das Erfassen und/oder Auslesen von Strichcode effizienter, insbesondere kostengünstiger und/oder ausfallsicherer, zu gestalten.

Zur Lösung der Aufgabe ist ein optoelektronischer Sensor mit den Merkmalen des Anspruchs 1 vorgesehen.

Der erfindungsgemäße optoelektronische Sensor zum Erfassen und/oder Auslesen von Strichcode umfasst ein Pixelarray, welches ausgebildet ist, von einem Sichtbereich ausgesendetes Licht als Empfangslicht zu empfangen und dabei Empfangsdaten über den Sichtbereich zu gewinnen, und eine Verarbeitungseinheit, welche ausgebildet ist, lediglich gewonnene Empfangsdaten über einen Lesebereich in dem Sichtbereich zu verwenden, wobei die Empfangsdaten über den Lesebereich auf mittels eines Teilbereichs des Pixelarrays empfangenem Empfangslicht basieren.

Mit anderen Worten liegt der Erfindung der Gedanke zugrunden, anstatt Laserbasierte Technologie eine auf Pixel-basierte Technologie (z.B. sogenannte Matrix-Imager) zum Erfassen und/oder Auslesen von Strichcode zu verwenden. Dadurch, dass lediglich gewonnene Empfangsdaten über den Lesebereich, welche auf mittels nur eines Teilbereichs des Pixelarrays empfangenem Empfangslichts basieren, zum Erfassen und/oder Auslesen des Strichcodes verwendet werden, kann der Pixel-basierte optoelektronische Sensor speziell auf das Erfassen und/oder Auslesen von Strichcodes, insbesondere 1D-Codes, angepasst werden. Der Lesebereich entspricht einem Ausschnitt des Sichtbereichs des optoelektronischen Sensors. Der Strichcode kann in dem Lesebereich vorhanden sein. Durch Auswahl des Teilbereichs des Pixelarrays zum Gewinnen der Empfangsdaten kann der Lesebereich ausgewählt werden.

Schwingspiegel und insbesondere bewegenden Teile wie Aktuatoren müssen nicht vorgesehen werden, wodurch der erfindungsgemäße optoelektronische Sensor weniger verschleißanfällig und auch robuster gegen Schock und Vibrationen ist. Auf diese Weise können Kosten eingespart und/oder die Ausfallsicherheit verbessert werden. Die Verwendung der Empfangsdaten über den auf den Lesebereich eingeschränkten Sichtbereich bzw. des auf den Teilbereich eingeschränkten Pixelarrays erlaubt, Rechenleistung und/oder Datenspeicher einzusparen. In der Folge kann auch eine höhere Erfassungs- und/oder Auslesegeschwindigkeit bzw. Abtastrate erreicht werden. Dies kann vorteilhaft sein, wenn das Objekt mit dem zu erfassenden und/oder auszulesenden Strichcode, insbesondere an dem optoelektronischen Sensor vorbei, bewegt wird. Insgesamt kann so der optoelektronische Sensor zum Erfassen und/oder Auslesen von Strichcode hinsichtlich seiner Effizienz, insbesondere der Kosten und/oder Ausfallsicherheit, verbessert werden.

Gemäß einer Ausführungsform ist das Pixelarray ausgebildet (d.h. wird z.B. so angesteuert), nur Pixel in dem Teilbereich des Pixelarrays für das Empfangen des Empfangslichts zu aktivieren und/oder auszulesen. Die übrigen Pixel des Pixelarrays werden nicht ausgelesen und können deaktiviert sein. Auf diese Weise kann die Effizienz verbessert werden. Alternativ können die mittels der übrigen Pixel gewonnen Empfangsdaten (z.B. vor deren Verarbeitung) verworfen werden.

Gemäß einer Ausführungsform umfasst der optoelektronische Sensor ferner eine Beleuchtungseinheit, welche ausgebildet ist, Sendelicht in den Sichtbereich auszusenden, wobei das Pixelarray ausgebildet ist, von dem Sichtbereich reflektiertes Sendelicht als Empfangslicht zu empfangen und dabei die Empfangsdaten über den Sichtbereich, insbesondere über den Lesebereich, zu gewinnen.

Gemäß einer Ausführungsform umfasst die Beleuchtungseinheit zumindest eine Reihe und/oder Spalte an Leuchtmitteln, insbesondere LEDs. Vorzugsweise sind die Leuchtmittel an einem Randbereich des Pixelarrays und/oder um das Pixelarray herum angeordnet. Durch das Erfassen und/oder Auslesen des Strichcodes lediglich anhand der Empfangsdaten über den Lesebereich bzw. unter Verwendung nur eines Teilbereichs des Pixelarrays kann die Beleuchtungseinheit einfacher ausfallen und beispielsweise durch LEDs bereitgestellt werden.

Gemäß einer Ausführungsform umfasst die Beleuchtungseinheit zumindest zwei Reihen, vorzugsweise zumindest drei Reihen, an Leuchtmitteln, welche oberhalb des Pixelarrays angeordnet sind. Alternativ oder zusätzlich umfasst die Beleuchtungseinheit zumindest zwei Reihen, vorzugsweise zumindest drei Reihen, an Leuchtmitteln, welche unterhalb des Pixelarrays angeordnet sind. Um eine Beleuchtung des Sichtbereichs bzw. von Lesebereichen in dem Sichtbereich zu verbessern, können neben zwei Reihen an Leuchtmitteln, welche in herkömmlichen Pixel-basierte Sensoren Standard sein können, ober- und/oder unterhalb des Pixelarrays noch weitere Reihen an Leuchtmitteln vorhanden sein. Dies kann insbesondere der Fall sein, wenn der Sichtbereich bzw. Lesebereiche in dem Sichtbereich wie hierin beschrieben dynamisch erfasst wird bzw. werden.

Gemäß einer Ausführungsform sind die Leuchtmittel in ihrer Beleuchtungsstärke individuell einstellbar. Jedes der Leuchtmittel kann daher so angesteuert werden, dass eine (im Rahmen des Leistungsbereichs des jeweiligen Leuchtmittels) beliebige Beleuchtungsstärke eingestellt werden kann. Somit kann zum Beispiel der volle Sichtbereich großzügig ausgeleuchtet werden. Zusätzlich oder alternativ kann die Beleuchtung auf einen bestimmten Bereich, wie zum Beispiel den aktiven Lesebereich, projiziert und/oder fokussiert werden. Insgesamt kann eine optimale Beleuchtung erreicht werden. Fokussiert kann dabei so verstanden werden, dass eine Optik genutzt wird, um eine Fokussierung zu bewirken. Alternativ kann auch keine Optik (und z.B. keine Linsen) für die Fokussierung vorgesehen sein, sodass unter Fokussierung dann insbesondere eine unterschiedlich starke Beleuchtung zu verstehen ist.

Gemäß einer Ausführungsform werden die Leuchtmittel so angesteuert, dass mittels Einstellung der Beleuchtungsstärke der Leuchtmittel das Sendelicht auf den Lesebereich fokussiert wird. Insbesondere kann die Beleuchtungseinheit so ausgebildet sein, die Leuchtmittel so anzusteuern, dass mittels Einstellung der Beleuchtungsstärke der Leuchtmittel das Sendelicht auf den Lesebereich fokussiert wird. Die Beleuchtung kann somit auf den Lesebereich konzentriert werden, was Energie sparen und Kosten reduzieren kann. Zudem kann die Verwendung von einfacheren und kostengünstigeren Leuchtmitteln und/oder von einfacherer und kostengünstigerer Steuerelektronik eröffnet sein.

Gemäß einer Ausführungsform werden die Leuchtmittel so angesteuert, dass die Beleuchtungsstärke der Leuchtmittel entlang der Reihe an Leuchtmitteln zunimmt. Insbesondere kann die Beleuchtungseinheit ausgebildet sein, die Leuchtmittel so anzusteuern, dass die Beleuchtungsstärke der Leuchtmittel entlang der Reihe an Leuchtmitteln zunimmt. Wenn der Strichcode beispielsweise nicht parallel zu dem bzw. frontal vor den optoelektronischen Sensor geführt wird, können die Leuchtmittel so angesteuert werden, dass ein näherliegender Bereich des Strichcodes weniger stark beleuchtet wird als wie ein entfernter liegender Bereich des Strichcodes.

Gemäß einer Ausführungsform umfasst das Pixelarray Spalten und/oder Zeilen an Pixeln, wobei das Pixelarray ausgebildet ist (bzw. so angesteuert wird), das Empfangslicht mit einer Anzahl an Zeilen und/oder einer Anzahl an Spalten zu empfangen. Die Anzahl kann vorab festgelegt sein. Die Anzahl kann kleiner als die Gesamtzahl aller vorhandenen Zeilen und/oder Spalten sein. Die Anzahl an Zeilen und/oder Anzahl Spalten können in einem Zeilen- oder Spaltenbereich vorhanden sein bzw. einem Zeilen- oder Spaltenbereich auf dem Pixelarray entsprechen. Durch Auswahl des (aktiven) Zeilen- oder Spaltenbereichs kann der zugehörige, erfasste Lesebereich flexibel für eine bestimmte Anwendung angepasst werden. Beispielsweise kann der Lesebereich an eine erwarte Position und/oder Orientierung (z.B. vertikal oder horizontal) des an einem Objekt angebrachten Strichcodes angepasst werden. Zudem kann die Anzahl der auszulesenden Pixel bzw. die zu verarbeitenden Datenmenge und in der Folge die Erfassungs- und/oder Auslesegeschwindigkeit eingestellt werden.

Gemäß einer Ausführungsform ist das Pixelarray ausgebildet (bzw. wird so angesteuert), mit einem ersten Zeilenbereich des Pixelarrays Empfangslicht zu empfangen, wobei der erste Zeilenbereich eine erste Anzahl an, insbesondere direkt nebeneinander liegenden, Zeilen, insbesondere über deren gesamte Breite, umfasst, und nachfolgend mit einem zweiten Zeilenbereich des Pixelarrays Empfangslicht zu empfangen, wobei der zweite Zeilenbereich eine zweite Anzahl an, insbesondere direkt nebeneinander liegenden, Zeilen, insbesondere über deren gesamte Breite, umfasst, wobei der zweite Zeilenbereich von dem ersten Zeilenbereich verschieden ist. Die erste Anzahl und die zweite Anzahl können gleich oder verschieden voneinander sein. Die erste Anzahl kann 1 oder mehr sein, und beispielsweise zwischen 1 und 200, bevorzugt zwischen 50 und 150, liegen. Die zweite Anzahl kann 1 oder mehr sein, und beispielsweise zwischen 1 und 200, bevorzugt zwischen 50 und 150, liegen.

Gemäß einer Ausführungsform ist der zweite Zeilenbereich nur teilweise oder nicht mit dem ersten Zeilenbereich überlappend.

Gemäß einer Ausführungsform schließt der zweite Zeilenbereich an den ersten Zeilenbereich, insbesondere direkt, an.

Gemäß einer Ausführungsform ist das Pixelarray ausgebildet (bzw. wird so angesteuert), mit dem ersten Zeilenbereich des Pixelarrays Empfangslicht von einem ersten Lesebereich zu empfangen und dabei einen ersten Empfangsdatensatz über den ersten Lesebereich zu gewinnen, und nachfolgend mit dem zweiten Zeilenbereich des Pixelarrays Empfangslicht von einem zweiten Lesebereich zu empfangen und dabei einen zweiten Empfangsdatensatz über den zweiten Lesebereich zu gewinnen. Vorzugsweise ist der zweite Lesebereich von dem ersten Lesebereich verschieden.

Gemäß einer Ausführungsform projiziert und/oder fokussiert die Beleuchtungseinheit für das Gewinnen des ersten Empfangsdatensatzes das Sendelicht auf den ersten Lesebereich und nachfolgend für das Gewinnen des zweiten Empfangsdatensatzes das Sendelicht auf den zweiten Lesebereich. Beispielsweise können die verschiedenen Reihen von Leuchtmitteln so eingestellt werden, dass die resultierende Beleuchtung jeweils einen gewünschten der verschiedenen Lesebereiche hervorhebt und z.B. besonders hell beleuchtet. Dazu können die Leuchtmittel von mehreren Reihen aktiviert werden und zusammenwirken um z.B. genau und/oder nur den gewünschten Lesebereich besonders hell und/oder homogen zu beleuchten.

Gemäß einer Ausführungsform ist Verarbeitungseinheit ausgebildet, den ersten und zweiten Empfangsdatensatz in einen erweiterten Empfangsdatensatz zusammenzuführen und den erweiterten Empfangsdatensatz zu verwenden. Beispielsweise kann ein schräg angeordneter Strichcode, welcher nicht vollständig in einem der Lesebereiche vorhanden ist bzw. welcher aus den Lesebereichen jeweils teilweise herausragt, trotzdem anhand des zusammengeführten erweiterten Empfangsdatensatzes erkannt und/oder ausgelesen werden. Die Verarbeitungseinheit kann zum Beispiel einen Prozessor, Mikroprozessor, FPGA, Microcontroller und/oder Server umfassen. Die Verarbeitungseinheit kann ein Speichermedium umfassen.

Gemäß einer Ausführungsform ist der zweite Lesebereich nur teilweise oder nicht mit dem ersten Lesebereich überlappend.

Gemäß einer Ausführungsform schließt der zweite Lesebereich an den ersten Lesebereich, insbesondere direkt, an.

Gemäß einer Ausführungsform ist das Pixelarray ausgebildet (bzw. wird so angesteuert), das Empfangslicht abwechselnd und/oder in einer bestimmten Reihenfolge mit verschiedenen Zeilenbereichen des Pixelarrays zu empfangen. Insbesondere kann das Pixelarray ausgebildet sein (bzw. kann so angesteuert werden), das Empfangslicht auf dem Pixelarray von oben nach unten wandernd und/oder umgekehrt mit verschiedenen Zeilenbereichen des Pixelarrays zu empfangen. Vorzugsweise ist das Pixelarray ausgebildet (bzw. wird so angesteuert), das Empfangslicht in zyklischer Reihenfolge mit verschiedenen Zeilenbereichen des Pixelarrays zu empfangen. Dabei können ausgewählte oder alle in dem Pixelarray verfügbaren Zeilen bzw. Zeilenbereiche verwendet werden, um anwendungsspezifisch Empfangsdaten über bestimmte oder alle Lesebereiche in dem Sichtbereich Daten zu gewinnen. Je nachdem, wie schnell der aktive Zeilenbereich gewechselt bzw. die Position des aktiven Lesebereichs verschoben wird, kann die Erfassungs- und/oder Auslesegeschwindigkeit beeinflusst und somit anwendungsspezifisch eingestellt werden.

Die Verarbeitungseinheit kann ausgebildet sein, den Strichcode in den Empfangsdaten über den Lesebereich, insbesondere in dem ersten Empfangsdatensatz, in dem zweiten Empfangsdatensatz und/oder in dem erweiterten Empfangsdatensatz, zu erkennen und/oder auszulesen. Die Verarbeitungseinheit kann ausgebildet sein, den erkannten und/oder ausgelesen Strichcode zu dekodieren. Die Verarbeitungseinheit kann ausgebildet sein, einen auf dem erkannten und/oder ausgelesenen, insbesondere dekodierten, Strichcode basierenden Ausgabeparameter auszugeben.

Weiterer Gegenstand der Erfindung ist eine Verwendung eines hierin beschriebenen optoelektronischen Sensors zum Erfassen und/oder Auslesen von Strichcode.

Weiterer Gegenstand der Erfindung ist ein Verfahren zum Erfassen und/oder Auslesen von Strichcode, wobei mittels eines Pixelarray von einem Sichtbereich ausgesendetes Licht als Empfangslicht empfangen wird und dabei Empfangsdaten über einen Sichtbereich gewonnen werden, und wobei lediglich gewonnene Empfangsdaten über einen Lesebereich in dem Sichtbereich (zum Erfassen und/oder Auslesen des Strichcodes) verwendet werden, wobei die Empfangsdaten über den Lesebereich auf mittels eines Teilbereichs des Pixelarrays empfangenem Empfangslichts basieren.

Es versteht sich, dass das bezüglich des erfindungsgemäßen optoelektronischen Sensors Beschriebene auch für die Verwendung des optoelektronischen Sensors und das Verfahren gilt. Dies gilt insbesondere für Ausführungsformen und Vorteile.

Weiterhin ist es zu verstehen, dass alle hierin offenbarten Merkmale und Ausführungsformen kombiniert werden können, wenn nicht ausdrücklich anders angegeben.

Nachfolgend wird die Erfindung rein beispielhaft anhand möglicher Ausführungsformen unter Bezugnahme auf die beigefügte Zeichnung beschrieben. Es zeigen:
- Fig. 1: eine schematische Darstellung eines optoelektronischen Sensors;
- Fig. 2: eine schematische Darstellung eines optoelektronischen Sensors in Seitenansicht;
- Fig. 3: eine schematische Darstellung eines optoelektronischen Sensors in Frontansicht;
- Fig. 4: eine Seitenansicht des optoelektronischen Sensors von Fig. 3;
- Fig. 5: eine Draufsicht des optoelektronischen Sensors von Fig. 4.

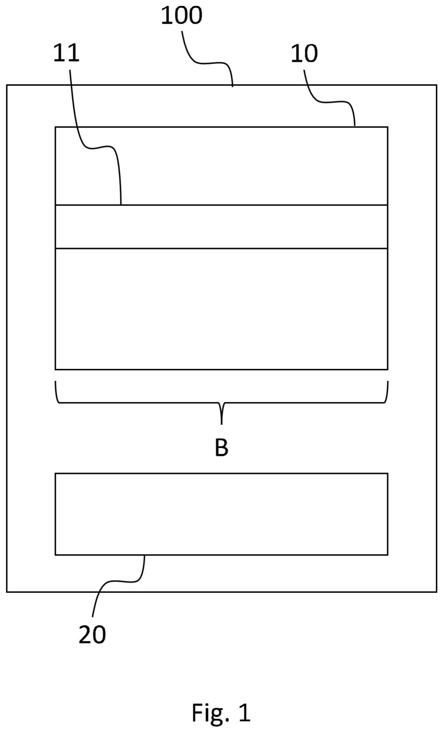

Der in Fig.1 schematisch dargestellte optoelektronische Sensor 100 zum Erfassen und/oder Auslesen von Strichcode umfasst ein Pixelarray 10, welches ausgebildet ist, von einem Sichtbereich ausgesendetes Licht als Empfangslicht zu empfangen und dabei Empfangsdaten über den Sichtbereich zu gewinnen, und eine Verarbeitungseinheit 20, welche ausgebildet ist, lediglich gewonnene Empfangsdaten über einen Lesebereich in dem Sichtbereich zu verwenden, wobei die Empfangsdaten über den Lesebereich auf mittels eines Teilbereichs 11 des Pixelarrays 10 empfangenem Empfangslicht basieren. Wir in Fig. 1 dargestellt kann der Teilbereich 11 des Pixelarrays 10 einem Zeilenbereich entsprechen, wobei die in dem Zeilenbereich umfassten Zeilen über deren gesamte Breite B enthalten sein können.

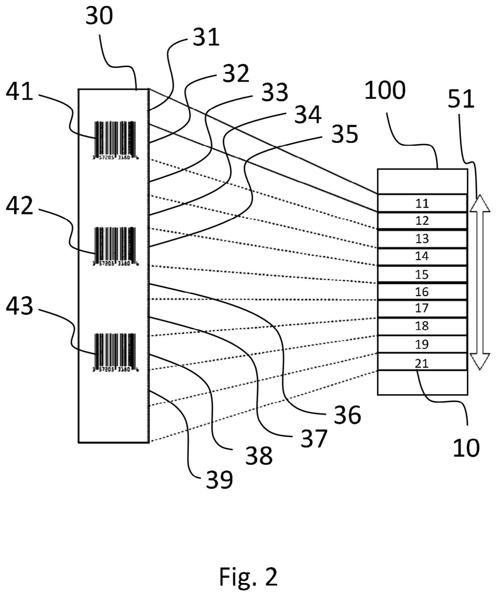

Fig. 2 zeigt schematisch eine Seitenansicht eines optoelektronischen Sensors 100 zum Erfassen und/oder Auslesen von Strichcode, welcher die gleichen oder ähnlichen Komponenten umfassen kann wie der in Fig. 1 gezeigte optoelektronische Sensor. Das Pixelarray 10 in Fig. 2 ist ausgebildet, mit neun verschiedenen Zeilenbereichen 11 bis 19 des Pixelarrays Empfangslicht von dem Sichtbereich 30 zu empfangen, wobei jeder der Zeilenbereiche eine vorab festgelegte Anzahl an, insbesondere direkt nebeneinander liegenden, Zeilen umfassen kann. Beispielsweise kann jeder der neun Zeilenbereiche 11 bis 19 eine Anzahl von 90, 140 oder 196 Zeilen an Pixeln umfassen. Jeder der Zeilenbereiche 11 bis 19 kann die in dem jeweiligen Zeilenbereich umfassten Zeilen über deren gesamte Breite umfassen. Wie in Fig. 2 gezeigt überlappen die Zeilenbereiche 11 bis 19 nicht miteinander und schließen direkt aneinander an. Alternativ können die Zeilenbereiche 11 bis 19 teilweise überlappen. Beispielsweise können bestimmte Zeilen (z.B. zwischen 1 und 10 Zeilen) von zwei nebeneinander liegenden Zeilenbereichen doppelt genutzt werden. Auf diese Weise kann eine Redundanz geschaffen werden. Alternativ oder zusätzlich kann auch die Pixelhöhe von bestimmten Zeilen im Vergleich zu den übrigen Zeilen unterschiedlich sein. Es versteht sich, dass auch mehr weniger oder mehr als neun Zeilenbereiche vorhanden sein können, also zum Beispiel acht oder zehn Zeilenbereiche.

Um an einem Objekt, z.B. einer Palette mit mehreren Packstücken, angebrachte Strichcodes 41, 42, 43 zu erfassen und/oder auszulesen, ist das Pixelarray 10 in Fig. 2 ausgebildet, das Empfangslicht abwechselnd und/oder in einer bestimmten Reihenfolge, insbesondere auf dem Pixelarray 10 von oben nach unten wandernd und/oder umgekehrt (wie mit dem Pfeil 51 in Fig. 2 verdeutlicht), mit den verschiedenen Zeilenbereichen 11 bis 19 des Pixelarrays 10 zu empfangen. Vorzugsweise ist das Pixelarray 10 ausgebildet, das Empfangslicht in zyklischer Reihenfolge mit den verschiedenen Zeilenbereichen 11 bis 19 des Pixelarrays 10 zu empfangen. Dabei kann zum Beispiel immer nur eines der Zeilenbereiche 11 bis 19 für den Empfang von Empfangslicht aktiviert sein und/oder ausgelesen werden. Mit anderen Worten kann der aktive Zeilenbereich von einem Zeilenbereich 11 im oberen Bereich des Pixelarrays 10 auf dem Pixelarray 10 nach unten zu einem Zeilenbereich 19 im unteren Bereich des Pixel 10 und wieder zurückwandern. Es können ausgewählte oder alle in dem Pixelarray verfügbaren Zeilen bzw. Zeilenbereiche für einen Abtastvorgang des Sichtbereichs bzw. Scan-Durchlauf verwendet werden, um anwendungsspezifisch Empfangsdaten über bestimmte oder über alle Lesebereiche in dem Sichtbereich 30 zu gewinnen. Beispielsweise können auch nur die Zeilenbereiche 11 bis 14 abwechselnd und/oder in zyklischer Reihenfolge aktiv geschaltet werden. Dies kann insbesondere der Fall sein, wenn in einer spezifischen Anwendung nur der Strichcode 41 im oberen Bereich des Sichtbereichs 30 erfasst und/oder ausgelesen werden soll. Als weiteres Beispiel können bestimmte Zeilenbereiche, wie z.B. Zeilenbereich 21 am unteren Rand des Pixelarrays, welche unter Umständen nicht ausreichend Empfangslicht empfangen bzw. beleuchtet werden können und daher für das Erfassen und/oder Auslesen der Strichcodes ungeeignet sein können, weggelassen, d.h. deaktiviert und/oder nicht ausgelesen, werden.

Je nachdem, wie schnell der aktive Zeilenbereich gewechselt und somit die Position des aktiven Lesebereichs verschoben wird, kann die Erfassungs- und/oder Auslesegeschwindigkeit beeinflusst und somit anwendungsspezifisch eingestellt werden.

Bi dem Empfang von Empfangslicht mit den verschiedenen Zeilenbereichen 11 bis 19 kann das Pixelarray 10 über die zugehörigen verschiedenen Lesebereiche 31 bis 39 in dem Sichtbereich 30 des Pixelarrays 10 verschiedene Empfangsdatensätze gewinnen. Wie in Fig. 2 gezeigt stellen die Lesebereiche 31 bis 39 Ausschnitte des Sichtbereichs 30 dar, überlappen nicht miteinander und schließen direkt aneinander an. Alternativ können die Lesebereiche 31 bis 39 teilweise überlappen. Auf diese Weise kann eine Redundanz geschaffen werden. Die Verarbeitungseinheit (nicht in Fig. 2 gezeigt) kann ausgebildet sein, in einer Datennachverarbeitung mehrere der gewonnene Empfangsdatensätze in zumindest einen erweiterten Empfangsdatensatz zusammenzuführen den erweiterten Empfangsdatensatz zu verwenden. Beispielsweise kann die Verarbeitungseinheit ausgebildet sein, die über die Lesebereiche 31 bis 33 gewonnenen Empfangsdatensätze in einen ersten erweiterten Empfangsdatensatz, die über die Lesebereiche 34 bis 36 gewonnenen Empfangsdatensätze in einen zweiten erweiterten Empfangsdatensatz und die über die Lesebereiche 37 bis 39 gewonnenen Empfangsdatensätze in einen dritten erweiterten Empfangsdatensatz zusammenzuführen und die erweiterten Empfangsdatensätze zu verwenden. Zusätzlich oder alternativ kann die Verarbeitungseinheit (nicht in Fig. 2 gezeigt) ausgebildet sein, alle gewonnenen Empfangsdatensätze über die Lesebereiche 31 bis 39 zu einem Gesamtdatensatz zusammenzuführen und den Gesamtdatensatz zu verwenden. Wenn die Strichcodes 41, 42, 43 beispielsweise relativ zu dem optoelektronischen Sensor 100 schräg angeordnet sind und somit nicht vollständig in einem der Lesebereiche 11 bis 19 vorhanden sind, können die Strichcodes trotzdem anhand der erweiterten Empfangsdatensätze und/oder anhand des Gesamtdatensatzes erkannt und/oder ausgelesen werden.

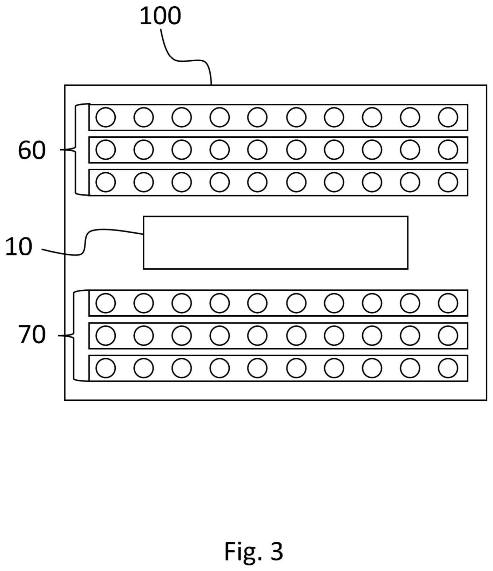

Fig. 3 zeigt schematisch eine Frontsicht eines optoelektronischen Sensor 100 zum Erfassen und/oder Auslesen von Strichcode, welcher die gleichen oder ähnlichen Komponenten umfassen kann wie die in Fig. 1 und Fig. 2 gezeigten optoelektronischen Sensoren. Der optoelektronische Sensor 100 in Fig. 3 umfasst zusätzlich eine Beleuchtungseinheit 60, 70, welche ausgebildet ist, Sendelicht in den Sichtbereich 30 (nicht in Fig. 3 gezeigt) auszusenden, wobei das Pixelarray 10 ausgebildet ist, von dem Sichtbereich reflektiertes Sendelicht als Empfangslicht zu empfangen und dabei die Daten über den Sichtbereich 30, insbesondere über die Lesebereiche 31 bis 39 in dem Sichtbereich 30, zu gewinnen. Die Beleuchtungseinheit kann ein drei Reihen 60 an Leuchtmitteln, insbesondere LEDs, oberhalb des Pixelarrays 10 und drei Reihen 70 an Leuchtmitteln, insbesondere LEDs, unterhalb des Pixelarrays 10 umfassen. Auf diese Weise kann die Beleuchtung des Sichtbereichs bzw. der Lesebereiche in dem Sichtbereich verbessert werden. Dies kann insbesondere vorteilhaft sein, wenn der Sichtbereich bzw. die Lesebereiche wie hierin beschrieben dynamisch erfasst werden.

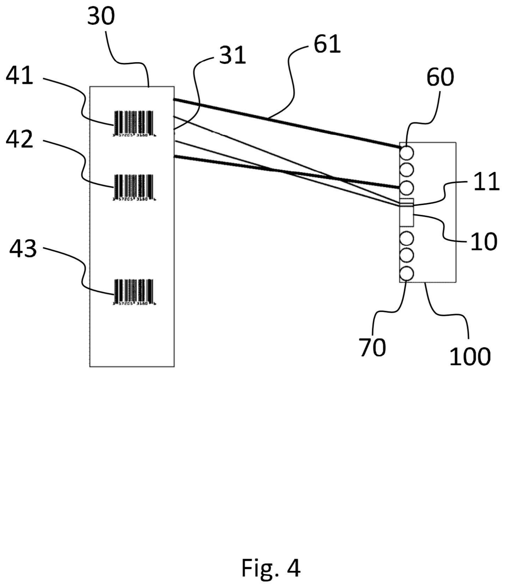

Fig. 4 zeigt schematisch eine Seitenansicht des optoelektronischen Sensor 100 von Fig. 3. Die Leuchtmittel der Beleuchtungseinheit 60, 70 können in ihrer Beleuchtungsstärke individuell einstellbar sein. Jedes der Leuchtmittel kann daher so angesteuert werden, dass eine (im Rahmen des Leistungsbereichs des jeweiligen Leuchtmittels) beliebige Beleuchtungsstärke eingestellt werden kann. Beispielsweise kann, wie in Fig. 4 dargestellt, durch Aktivierung der Leuchtmittel und/oder Erhöhung der Beleuchtungsstärke der Leuchtmitteln in den Reihen 60 an Leuchtmitteln oberhalb des Pixelarrays 10 die Beleuchtung auf einen aktiven Beleuchtungsbereich 61 projiziert und/oder fokussiert werden. Der aktive Beleuchtungsbereich 61 kann einen aktiven Lesebereich 31 in einem oberen Bereich des Sichtbereichs 30 umfassen, wobei der aktive Lesebereich 31 entsprechend mittels eines aktiven Zeilenbereichs 11 im oberen Bereich des Pixelarrays 10 erfasst wird. Mittels Änderung der Beleuchtungsstärke der Leuchtmittel kann der aktive Beleuchtungsbereich 61 während dem dynamischen Erfassen der Lesebereiche gewechselt bzw. verschoben werden. Dadurch kann das Erfassen und/oder Auslesen der Strichcodes 41, 42, 43 in dem Sichtbereich 30 effizienter gestaltetet werden, da Energie eingespart und Kosten reduziert werden können.

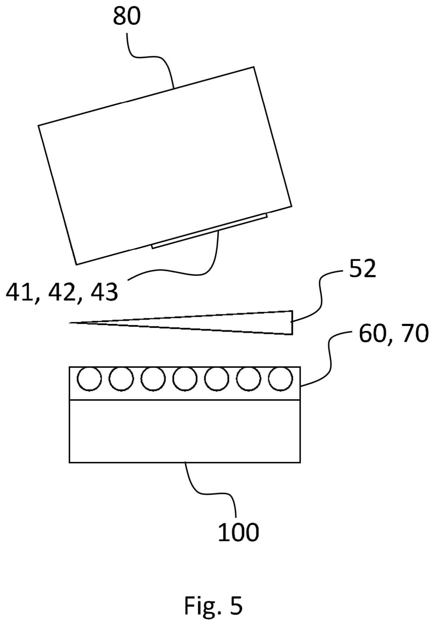

Fig. 5 zeigt schematisch eine Draufsicht des optoelektronischen Sensors 100 von Fig. 3 und Fig. 4. Wie durch die Rampe 52 in Fig. 5 verdeutlicht können Leuchtmittel der Beleuchtungseinheit 60, 70 so angesteuert werden, dass die Beleuchtungsstärke der Leuchtmittel entlang einer Reihe an Leuchtmitteln zunimmt. Wenn das Objekt 80 mit den Strichcodes 41, 42, 43 beispielsweise nicht parallel an dem optoelektronischen Sensor 100 vorbei bzw. nicht frontal vor den optoelektronischen Sensor 10 geführt wird, können die Leuchtmittel so angesteuert werden, dass näherliegende Bereiche der Strichcodes 41, 42, 43 weniger stark beleuchtet werden als wie entfernter liegende Bereiche der Strichcodes 41, 42, 43.

### Bezugszeichenliste

- 10: Pixelarray
- 11: Zeilenbereich
- 12: Zeilenbereich
- 13: Zeilenbereich
- 14: Zeilenbereich
- 15: Zeilenbereich
- 16: Zeilenbereich
- 17: Zeilenbereich
- 18: Zeilenbereich
- 19: Zeilenbereich
- 21: Zeilenbereich
- 20: Verarbeitungseinheit
- 30: Sichtbereich
- 31: Lesebereich
- 32: Lesebereich
- 33: Lesebereich
- 34: Lesebereich
- 35: Lesebereich
- 36: Lesebereich
- 37: Lesebereich
- 38: Lesebereich
- 39: Lesebereich
- 41: Strichcode
- 42: Strichcode
- 43: Strichcode
- 51: Pfeil
- 52: Rampe
- 60: Reihen an Leuchtmitteln
- 70: Reihen an Leuchtmitteln
- 80: Objekt

## Patentansprüche

1. Optoelektronischer Sensor zum Erfassen und/oder Auslesen von Strichcode (41, 42, 43), umfassend
ein Pixelarray (10), welches ausgebildet ist, von einem Sichtbereich (30) ausgesendetes Licht als Empfangslicht zu empfangen und dabei Empfangsdaten über den Sichtbereich (30) zu gewinnen; und
eine Verarbeitungseinheit (20), welche ausgebildet ist, lediglich gewonnene Empfangsdaten über einen Lesebereich (31-39) in dem Sichtbereich (30) zu verwenden, wobei die Empfangsdaten über den Lesebereich (31-39) auf mittels eines Teilbereichs (11-19) des Pixelarrays (10) empfangenem Empfangslicht basieren.

2. Optoelektronischer Sensor nach Anspruch 1, wobei das Pixelarray (10) ausgebildet ist, nur Pixel in dem Teilbereich (11-19) des Pixelarrays (10) für das Empfangen des Empfangslichts zu aktivieren und/oder auszulesen.

3. Optoelektronischer Sensor nach Anspruch 1 oder 2, ferner umfassend eine Beleuchtungseinheit (60, 70), welche ausgebildet ist, Sendelicht in den Sichtbereich (30) auszusenden, wobei das Pixelarray (10) ausgebildet ist, von dem Sichtbereich (30) reflektiertes Sendelicht als Empfangslicht zu empfangen und dabei die Empfangsdaten über den Sichtbereich (30), insbesondere über den Lesebereich (31-39), zu gewinnen.

4. Optoelektronischer Sensor nach Anspruch 3, wobei die Beleuchtungseinheit (60, 70) zumindest eine Reihe (60, 70) und/oder Spalte an Leuchtmitteln, insbesondere LEDs, umfasst, wobei die Leuchtmittel vorzugsweise an einem Randbereich des Pixelarrays (10) und/oder um das Pixelarray (10) herum angeordnet sind.

5. Optoelektronischer Sensor nach Anspruch 4,
wobei die Beleuchtungseinheit (60, 70) zumindest zwei Reihen (60), vorzugsweise zumindest drei Reihen (60), an Leuchtmitteln umfasst, welche oberhalb des Pixelarrays (10) angeordnet sind; und/oder
wobei die Beleuchtungseinheit (60, 70) zumindest zwei Reihen (70), vorzugsweise zumindest drei Reihen (70), an Leuchtmitteln umfasst, welche unterhalb des Pixelarrays (10) angeordnet sind.

6. Optoelektronischer Sensor nach Anspruch 3, 4 oder 5, wobei die Leuchtmittel in ihrer Beleuchtungsstärke individuell einstellbar sind, wobei die Leuchtmittel so angesteuert werden, dass mittels Einstellung der Beleuchtungsstärke der Leuchtmittel das Sendelicht auf den Lesebereich (31-39) projiziert und/oder fokussiert wird.

7. Optoelektronischer Sensor nach Anspruch 6, wobei die Leuchtmittel so angesteuert werden, dass die Beleuchtungsstärke der Leuchtmittel entlang der Reihe (60, 70) an Leuchtmitteln zunimmt.

8. Optoelektronischer Sensor nach einem der voranstehenden Ansprüche, wobei das Pixelarray (10) Spalten und/oder Zeilen an Pixeln umfasst, wobei das Pixelarray (10) ausgebildet ist, das Empfangslicht mit einer Anzahl Zeilen und/oder einer Anzahl an Spalten zu empfangen.

9. Optoelektronischer Sensor nach Anspruch 8,
wobei das Pixelarray (10) ausgebildet ist, mit einem ersten Zeilenbereich (11-19) des Pixelarrays (10) Empfangslicht zu empfangen, wobei der erste Zeilenbereich (11-19) eine erste Anzahl an, insbesondere direkt nebeneinander liegenden, Zeilen, insbesondere über deren gesamte Breite (B), umfasst, und nachfolgend mit einem zweiten Zeilenbereich (11-19) des Pixelarrays (10) Empfangslicht zu empfangen, wobei der zweite Zeilenbereich (11-19) eine zweite Anzahl an, insbesondere direkt nebeneinander liegenden, Zeilen, insbesondere über deren gesamte Breite (B), umfasst, wobei der zweite Zeilenbereich (11-19) von dem ersten Zeilenbereich (11-19) verschieden ist.

10. Optoelektronischer Sensor nach Anspruch 9,
wobei der zweite Zeilenbereich (11-19) nur teilweise oder nicht mit dem ersten Zeilenbereich (11-19) überlappend ist; und/oder wobei der zweite Zeilenbereich (11-19) an den ersten Zeilenbereich (11-19), insbesondere direkt, anschließt.

11. Optoelektronischer Sensor nach Anspruch 9 oder 10,
wobei das Pixelarray (10) ausgebildet ist, mit dem ersten Zeilenbereich (11-19) des Pixelarrays (10) Empfangslicht von einem ersten Lesebereich (31-39) zu empfangen und dabei einen ersten Empfangsdatensatz über den ersten Lesebereich (31-39) zu gewinnen, und nachfolgend mit dem zweiten Zeilenbereich (11-19) des Pixelarrays (10) Empfangslicht von einem zweiten Lesebereich (31-39) zu empfangen und dabei einen zweiten Empfangsdatensatz über den zweiten Lesebereich (31-39) zu gewinnen, wobei vorzugsweise der zweite Lesebereich (31-39) von dem ersten Lesebereich (31-39) verschieden ist, wobei vorzugsweise die Beleuchtungseinheit (60, 70) für das Gewinnen des ersten Empfangsdatensatzes das Sendelicht auf den ersten Lesebereich (31-39) projiziert und/oder fokussiert und nachfolgend für das Gewinnen des zweiten Empfangsdatensatzes das Sendelicht auf den zweiten Lesebereich (31-39) projiziert und/oder fokussiert, und/oder wobei vorzugsweise die Verarbeitungseinheit (20) ausgebildet ist, den ersten und zweiten Empfangsdatensatz zu einem erweiterten Empfangsdatensatz zusammenzuführen und den erweiterten Empfangsdatensatz zu verwenden.

12. Optoelektronischer Sensor nach Anspruch 11,
wobei der zweite Lesebereich (31-39) nur teilweise oder nicht mit dem ersten Lesebereich (31-39) überlappend ist; und/oder
wobei der zweite Lesebereich (31-39) an den ersten Lesebereich (31-39), insbesondere direkt, anschließt.

13. Optoelektronischer Sensor nach einem der Ansprüche 9 bis 12, wobei das Pixelarray (10) ausgebildet ist, das Empfangslicht abwechselnd und/oder in einer bestimmten Reihenfolge, insbesondere auf dem Pixelarray (10) von oben nach unten wandernd und/oder umgekehrt, mit verschiedenen Zeilenbereichen (11-19) des Pixelarrays (10) zu empfangen, wobei das Pixelarray (10) vorzugsweise ausgebildet ist, das Empfangslicht in zyklischer Reihenfolge mit verschiedenen Zeilenbereichen (11-19) des Pixelarrays (10) zu empfangen.

14. Verwendung eines optoelektronischen Sensors (100) nach einem der Ansprüche 1 bis 13 zum Erfassen und/oder Auslesen von Strichcode (41, 42, 43).

15. Verfahren zum Erfassen und/oder Auslesen von Strichcode (41, 42, 43), wobei mittels eines Pixelarray (10) von einem Sichtbereich (30) ausgesendetes Licht als Empfangslicht empfangen wird und dabei Empfangsdaten über den Sichtbereich (30) gewonnen werden; und
wobei lediglich gewonnene Empfangsdaten über einen Lesebereich (31-39) in dem Sichtbereich (30) verwendet werden, wobei die Empfangsdaten über den Lesebereich (31-39) auf mittels eines Teilbereichs (11-19) des Pixelarrays (10) empfangenem Empfangslichts basieren.
